# EUROPÄISCHE PATENTSCHRIFT

(11) **EP 1 344 959 B1**
(45) Veröffentlichungstag und Bekanntmachung des Hinweises auf die Patenterteilung: **21.02.2007**
(21) Anmeldenummer: 03005330.0
(22) Anmeldetag: 11.03.2003
(51) Int. Cl.: F16G 1/28, F16G 1/00

(54) **Vorrichtung zur Kraft- und/oder Bewegungsübertragung mittels Synchrongetriebe**
Force and/or movement transmission device with synchronised transmission
Dispositif de transmission de force et/ou de mouvement avec transmission synchronisée

(30) Priorität: 11.03.2002 DE 10210601; 19.07.2002 DE 10232965
(43) Veröffentlichungstag der Anmeldung: 17.09.2003
(73) Patentinhaber: Schechinger, Bernd, 08427 Fraureuth (DE)
(72) Erfinder: Schechinger, Bernd, 08427 Fraureuth (DE)
(74) Vertreter: Kruspig, Volkmar

(56) Entgegenhaltungen:
- EP-A- 0 525 732
- EP-A- 1 357 313
- DE-B- 1 292 456
- US-A- 3 068 710
- PATENT ABSTRACTS OF JAPAN Bd. 011, Nr. 123 (M-581), 17. April 1987 (1987-04-17) -& JP 61 263507 A (NIPPON MEKTRON LTD), 21. November 1986 (1986-11-21)
- PATENT ABSTRACTS OF JAPAN Bd. 015, Nr. 358 (M-1156), 10. September 1991 (1991-09-10) & JP 03 140654 A (TOYOTA AUTOM LOOM WORKS LTD), 14. Juni 1991 (1991-06-14)

## Beschreibung

Die Erfindung betrifft eine Vorrichtung zur Kraft- und/oder Bewegungsübertragung mittels Synchrongetriebe, umfassend mindestens einen Zahnriemen sowie mindestens eine Riemenscheibe, wobei der Zahnriemen in der neutralen Biegezone Zugstränge aufweist, gemäß Oberbegriff des Patentanspruchs 1.

Zahnriemengetriebe, bei denen die Bewegungs- und Kraftübertragung durch Formpaarung erfolgt, indem die Riemenzähne in die Verzahnung der Zahnscheiben eingreifen, sind bekannt.
Durch die Verbindung der Vorteile herkömmlicher Riemengetriebe, z.B. geringe Masse, hohe zulässige Umfangskraft, geräuscharmer und schwingungsdämpfender Verlauf, mit denen der Kettengetriebe, wie schlupffreie Bewegungsübertragung, geringe erforderliche Vorspannung und damit niedrige Lagerbelastung, ergibt sich für Zahnriemengetriebe ein sehr breites Einsatzgebiet. Dieses reicht von Kleinstantrieben in feinmechanischen Erzeugnissen bis hin zu Hauptantrieben in Industrieanlagen, da Leistungen von wenigen Watt bis nahezu 100 kW übertragen werden können und Riemengeschwindigkeiten bis im Bereich zu 80 m/s zulässig sind.

Aufgrund des schlupffreien Laufs werden Zahnriemengetriebe bevorzugt für Steuer- und Regelantriebe sowie in Büromaschinen und Haushaltsgeräten, aber auch in Werkzeug-, Druckerei- und Textilmaschinen, Förderanlagen und so weiter bei unterschiedlichen Übersetzungen eingesetzt. Zahnriemengetriebe werden nach einschlägigen Normen auch als Synchronriemengetriebe bezeichnet.

Synchronriemen eignen sich wegen der formschlüssigen Bewegungsübertragung für übersetzungsgetreue Antriebe, wobei der Einsatz als Linearantrieb ein häufiger Anwendungsfall ist. In dem Fall, wenn es notwendig ist, dem Linearschlitten Strom zuzuführen, müssen nach dem Stand der Technik bisher aufwendige Kabelschleppsysteme und/oder stromführende Gleitschienen verwendet werden. Insbesondere bei Kabelschleppsystemen muß die Masse des Systems selbst, d.h. der elektrischen Leiter bewegt, d.h. beschleunigt und abgebremst werden, was einen unnötigen Energieaufwand nach sich zieht und bei dynamischen Stellantrieben von Nachteil ist.

Aus JP61263507 ist eine Synchronriemenvorrichtung bekannt, wobei eine elektrostatische Spannung abgeleitet wird über einen Riemen. Diese Druckschrift wird als nächstliegender Stand der Technik angesehen; sie offenbart die Merkmale des Anspruchs 1.

Aus dem Vorgenannten ist es daher Aufgabe der Erfindung, die an sich bekannten Vorteile von Synchrongetrieben zur Kraft- und/oder Bewegungsübertragung zu nutzen und andererseits eine Möglichkeit zu schaffen, daß, z.B. für Linearantriebe, eine integrale Versorgung mit elektrischer Energie möglich wird. Dabei soll auf bisherige Kabelschleppsysteme oder Gleitschienen, welche stromführend ausgebildet sind, verzichtet werden.

Die Lösung der Aufgabe der Erfindung erfolgt mit einer Vorrichtung zur Kraftund/oder Bewegungsübertragung mittels Synchrongetriebe gemäß der Lehre nach Patentanspruch 1, wobei die Unteransprüche mindestens zweckmäßige Ausgestaltungen und Weiterbildungen umfassen.

Demgemäß besteht der Grundgedanke der Erfindung darin, im Zahnriemen selbst leitfähige Bereiche und/oder leitfähige Elemente einzubetten oder anzuordnen, die sich in Riemenlängsrichtung erstrecken, und im Bereich der Scheibenzahnköpfe mehrere in Querrichtung beabstandet angeordnete leitfähige Abschnitte vorzusehen, wobei zwischen den leitfähigen Abschnitten Isolierzonen bestehen, so daß die Vorrichtung mehrere Strompfade bilden kann.
Im Bereich am oder zwischen den Riemenzahnfüßen oder auf der Riemenrückseite sind dann die leitfähigen Bereiche und/oder Elemente zum Herstellen einer elektrischen Verbindung freiliegend oder in geeigneter Weise zum elektrischen Kontaktieren zugänglich ausgebildet.

Mehrere stromführende leitfähige Elemente, z.B. Litzen oder Bänder, die innerhalb des Trägermaterials auf der Höhe der neutralen Biegelinie im Zahnriemen angeordnet sind, können mehrere Strompfade, auch für Leistungsantriebe bilden.

Die Einspeisung des Stroms in den speziell ausgestalteten Zahnriemen kann bevorzugt über die Riemen- oder Synchronscheibe erfolgen.

In einer Ausführungsform besteht die Synchronscheibe aus Lamellen verschiedener Materialien mit mindestens leitfähigen Abschnitten. Durch z.B. erhabene Flächen an der Spitze des Zahns einer stromführenden Lamelle wird bei der Abwälzung des Riemens der Kontakt zur eingebetteten Litze im Zahnriemen hergestellt.

Ein besonderer Vorteil bei einer derartigen Übertragung der elektrischen Energie von einem Einspeisepunkt über den Zahnriemen hin zur Riemenscheibe ergibt sich dadurch, daß beim Zahnriemengetriebe eine große Zahl von Zähnen gleichzeitig in Eingriff ist. Damit wird eine niederohmige, stromtragfähige Verbindung zwischen den leitfähigen Bereichen und/oder leitfähigen Elementen des Zahnriemens hin zu entsprechenden leitfähigen Abschnitten der Riemenscheibe hergestellt.

Es liegt im Sinne der Erfindung, daß zwischen den leitfähigen Bereichen des Zahnriemens Isolierabschnitte angeordnet sind, die bevorzugt aus dem Zahnriemen-Werkstoff selbst bestehen. Ein solcher Werkstoff mit isolierenden Eigenschaften ist beispielsweise zähelastisches, formbeständiges Polyurethan PUR, das eine sehr hohe Strukturfestigkeit besitzt und abriebfest ist. Denkbar ist ebenfalls die Verwendung eines Zahnriemens, der aus Chloroprene besteht und der auf der Laufseite eine Schicht aus Polyamidgewebe aufweist, um die Zähne vor Abrieb zu schützen.

Die Erfindung ist unabhängig vom bisher üblichen Trapezprofil für die Riemenverzahnung auch bei Hochleistungsprofilen mit verbesserter Verzahnungsgeometrie anwendbar. Das Zahnvolumen wird in keinster Weise durch die spezielle Ausgestaltung des Zahnriemens mit elektrischen Leitern im Bereich der neutralen Biegezone beeinflußt oder beeinträchtigt.

Bei metallischen Zugsträngen, die z.B. als Stahllitze ausgebildet sind, kann die Litze mindestens einen der elektrischen Leiter bilden.

Für die elektrische Kontaktierung ist in einer Ausführungsform der Erfindung im Bereich zwischen den Riemenzahnfüßen eine Quernut ausgebildet.
Die Riemenscheibe umfaßt im Bereich der Scheibenzahnköpfe leitfähige Abschnitte, die die leitfähigen Bereiche des Zahnriemens elektrisch kontaktieren.

Wie erwähnt, kann die Riemenscheibe aus einer Lamellen-Sandwichstruktur mit leitfähigen und isolierenden Abschnitten bzw. Lamellen bestehen.

In einer Ausgestaltung der Erfindung kann der Zahnriemen eine weitere Verzahnung aufweisen, wobei auch oder alternativ über die Riemenrückseite eine elektrische Verbindung zu den leitfähigen Bereichen und/oder leitfähigen Elementen innerhalb des Riemens herstellbar ist.

Zur Gegenkontaktierung bei einseitig eingespannten Riemen kann eine elektrische Klemmleiste vorgesehen werden, die mit den leitfähigen Elementen, z.B. einer metallischen Litze oder einem Band in Verbindung steht.

Eine weitere Möglichkeit der Gegenkontaktierung geht von einer weiteren Riemenscheibe mit leitfähigen Eigenschaften aus.

Die Gegenkontaktierung kann aber auch über eine leitfähige Eigenschaften aufweisende Lauf- oder Spannrolle erfolgen.

Die Erfindung soll nachstehend anhand eines Ausführungsbeispiels sowie von Figuren näher erläutert werden.

Hierbei zeigen:
- Fig. 1: im oberen Bildteil einen Längsschnitt durch einen Zahnriemenabschnitt und im unteren Bildteil einen Querschnitt des Zahnriemens nach erstem Ausführungsbeispiel;
- Fig. 2: Längs- und Querschnitt eines Riemens nach dem zweiten Ausführungsbeispiel;
- Fig. 3: Längs- und Querschnitt eines Riemens mit Leitprofilen auf der Rückseite und
- Fig. 4: ein Beispiel eines Stromübertragungsrads.

Der Zahnriemen 1 kann beispielsweise aus einem Polyurethan-Basismaterial bestehen und im Inneren mehrere Zugstränge 2, z.B. aus Stahllitze umfassen.

Den Zugsträngen 2 benachbart sind mehrere Leiter 3 angeordnet, die von isolierenden Abschnitten getrennt sind. Die Isolierabschnitte werden durch das Basismaterial, z.B. Polyurethan, des Zahnriemens 1 gebildet.

Jeder der Leiter 3 kann eine Phase und damit einen Strompfad bilden.

Zwischen den Zahnfüßen des Zahnriemens 1, die am gezeigten Beispiel ein Hochleistungsprofil, z.B. HTD 8 aufweisen, sind Quernuten 4 vorhanden, die eine elektrische Kontaktierung der Leiter 3 durch eine (nicht gezeigte) Riemenscheibe ermöglichen.

In dem Fall, wenn die Zähne des Zahnriemens mit der Riemenscheibe in Eingriff befindlich sind, kontaktiert ein leitfähiger Abschnitt der Riemenscheibe über die Quernuten 4 den Leiter 3, um einen Stromfluß in gewünschter Weise zu erreichen.

Die Leiter 3 können durch ein Kupfergeflecht oder durch ein elastische Eigenschaften aufweisendes leitfähiges Band gebildet werden.

In einer Ausführungsform ist mindestens einer der Zugstränge 2 ebenfalls mit leitfähigen Eigenschaften versehen bzw. dient als Strompfad.

Die Riemenscheibe kann eine Lamellen-Sandwich-Struktur umfassen, wobei am Scheibenzahnkopf leitfähige Abschnitte vorgesehen sind, die dann die bereits beschriebene elektrische Kontaktierung mit dem oder den Leitern 3 ermöglichen.

Ergänzend kann der Zahnriemen 1 Mitnehmer im Riemenrücken, z.B. zu Transportzwecken, umfassen.

Ebenfalls besteht die Möglichkeit, den Zahnriemenrücken mit einer weiteren Verzahnung zu versehen, wobei auch oder alternativ über eine weitere Riemenscheibe und der Riemenrückseite eine elektrische Verbindung realisierbar ist.

Ein Stromabgriff im Sinne einer Gegenkontaktierung kann mittels einer weiteren Riemenscheibe vorgenommen werden, wobei aber auch eine leitfähige Eigenschaften aufweisende Lauf- oder Spannrolle Verwendung finden kann.

Insbesondere bei höheren Strombelastungen können mehrere Zahnriemen parallel, jeweils ein Riemengetriebe bildend, vorgesehen sein, die mit entsprechenden Riemenscheiben kämmen. Hierbei bildet jeder Riemen mit im Inneren befindlichen Leitern 3 mehrere Strompfade.

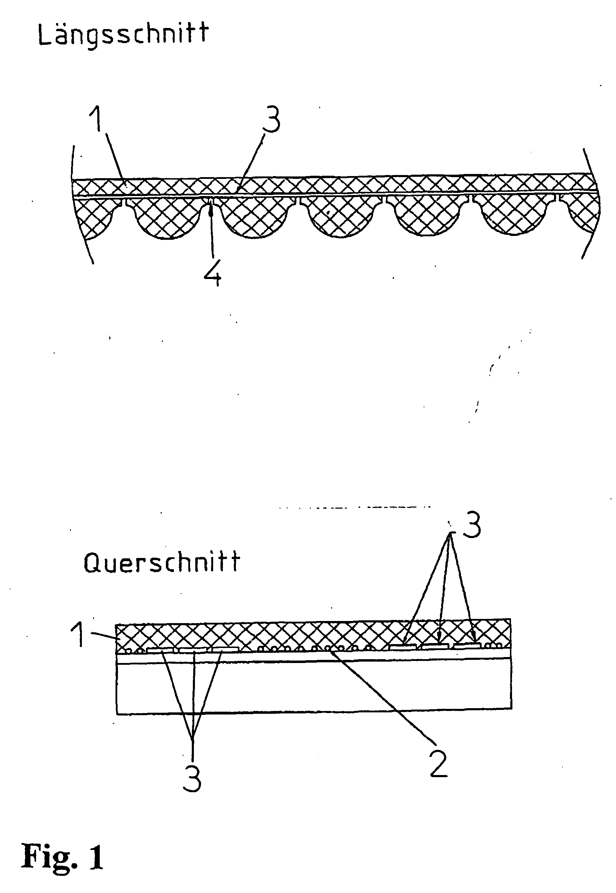

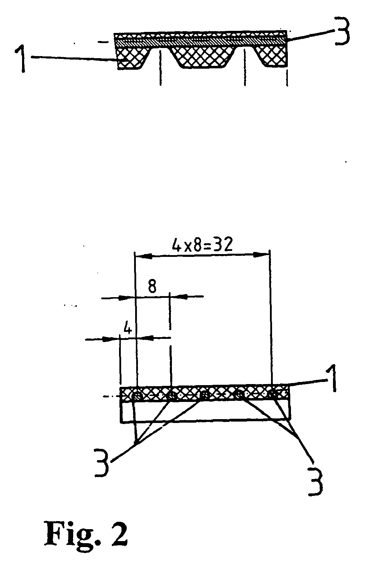

Die Ausführungsform eines Zahnriemens mit Leitprofilen gemäß Fig. 2 entspricht im wesentlichen derjenigen nach Fig. 1, wobei jedoch die Zahnform einen Trapezverlauf besitzt.

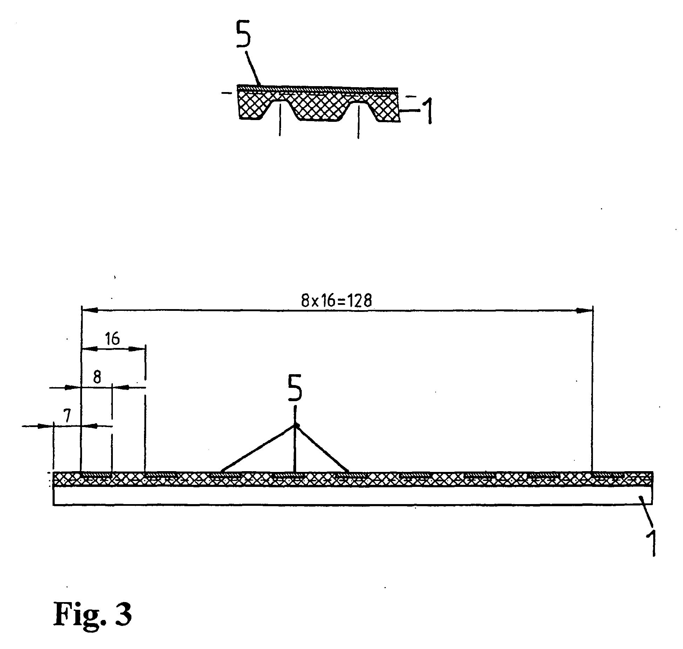

Ein Zahnriemen mit Leitprofilen 5 auf der Rückseite zeigt das Ausführungs beispiel nach Fig. 3. Die Rückseiten-Leitprofile 5 sind im Riemenvolumen eingebettet und schließen im wesentlichen mit der Rückseiten-Oberfläche bündig ab.

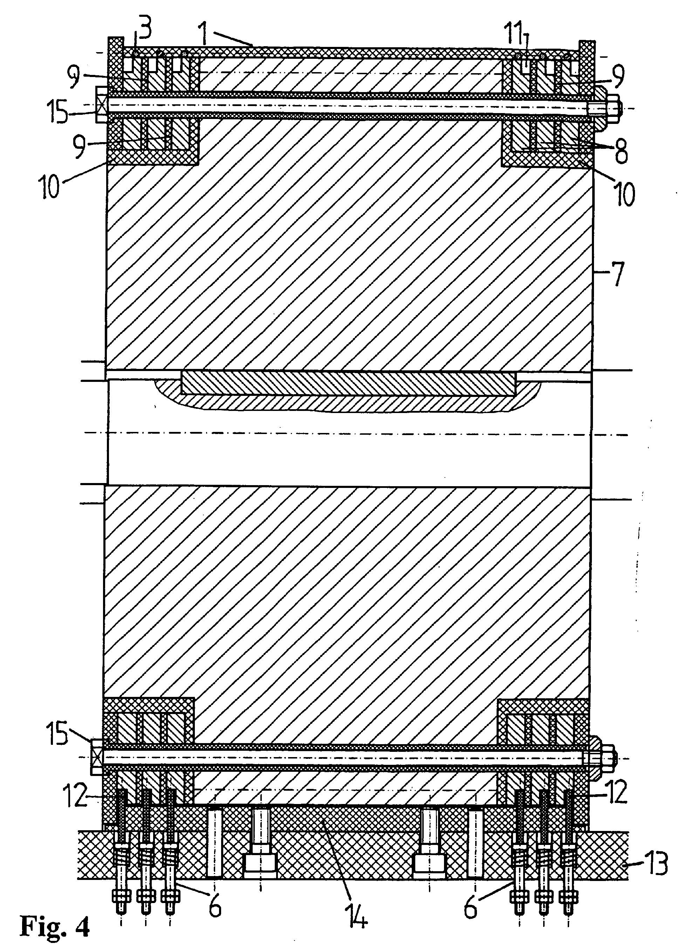

Die Stromübertragung zwischen dem Zahnriemen 1 und Gegenkontakten 6 über eine Riemenscheibe oder Rolle 7 soll anhand der Fig. 4 näher erläutert werden.

Eine den Zahnriemen 1 führende Riemenscheibe oder Rolle 7 besitzt umfangsseitig im Bereich der im Zahnriemen 1 eingebetteten Leiter eine Verzahnung aufweisende Polräder 8.
Wie dargestellt, sind im vorliegenden Fall jeweils drei Polräder 8 zu beiden Seiten der Rolle 7 angeordnet, wobei zwischen den Polrädern 8 Isolationsabschnitte 9 befindlich sind. Ein weiterer Isolationseinsatz 10 dient der elektrischen Trennung hin zum Material der Riemenscheibe oder Rolle 7, wenn diese selbst leitfähig ist.

Rücksprünge 11 im Bereich des jeweiligen Polrads dienen der Aufnahme bevorzugt federgelagerter Stifte 12, z.B. aus einem Graphit- oder graphitbeschichteten Material.

Die Lagerung der Stifte 12 innerhalb der Rücksprünge 11 im jeweiligen verzahnten Polrad sichert die gewünschte Führung, Stromtragfähigkeit und Sicherheit bei einem industriellen Einsatz. Möglicherweise anfallender Abrieb kann sich in den Rücksprüngen 11 nicht festsetzen.

Die Gegenkontakte 6 sind in einem isolierenden Tragblock 13 gelagert. Eine auf die innere Rollenbreite abgestimmte Isolationsplatte 14 besitzt Führungsbohrungen im Bereich der Stifte 12 und nimmt neben der Führungsfunktion für die Stifte 12 auch Kräfte auf, die bei Rotation der Riemenscheibe oder Rolle 7 bezogen auf die Stifte 12 auftreten.

Die Isolationsabschnitte 9, der Isolationseinsatz 10, aber auch die Polräder 8 sind scheibenförmig ausgebildet und über einen Bolzen 15 lösbarer Bestandteil der Riemenscheibe 7 bzw. der Rolle. Auf diese Weise kann eine Anpassung an unterschiedliche Zahnriemen 1 mit verschiedener Anordnung der Leiter 3 bzw. unterschiedlichen Leiterabständen vorgenommen werden.

Bei dem gezeigten Ausführungsbeispiel ist der Grundkörper der Riemenscheibe 7 nicht mit einer Stromtragfunktion beaufschlagt. Selbstverständlich liegt es im Sinne der Erfindung, daß auch die Rolle selbst oder Abschnitte dieser zur Stromleitung herangezogen werden kann. Auch können die Polräder 8 einen größeren Teil oder die gesamte Breite der Riemenscheibe 7 einnehmen, wobei dann den Polrädern neben der elektrischen auch eine zunehmende Kraftübertragungsfunktion zukommt.

Bevorzugt ist jedoch insbesondere beim Übertragen größerer Kräfte und hohen dynamischen Belastungen vorgesehen, die Funktionen Kraft- und Sromübertragung zu trennen, so daß bezüglich der Materialauswahl jeweils optimierte Lösungen geschaffen werden können.

Alles in allem gelingt es mit der vorstehend beschriebenen Erfindung, in besonders einfacher Weise sowohl eine Kraft- und/oder Bewegungsübertragung mittels eines Synchrongetriebes zu erreichen als auch eine Stromversorgung zu elektrischen Antriebselementen oder sonstigen Verbrauchern zu realisieren, ohne daß neben dem eigentlichen Getriebe z. B. ein Kabelschleppsystem erforderlich ist oder zusätzlich stromführende Gleitschienen notwendig werden.

### Bezugszeichenliste

- 1: Zahnriemen
- 2: Zugstränge
- 3: Leiter
- 4: Quernuten
- 5: Rückseitenleitprofil
- 6: Gegenkontakte
- 7: Riemenscheibe / Rolle
- 8: Polrad
- 9: Isolationsabschnitt
- 10: Isolationseinsatz
- 11: Rücksprung
- 12: Stift
- 13: Tragblock
- 14: Isolationsplatte
- 15: Bolzen

## Patentansprüche

1. Vorrichtung zur Kraft- und/oder Bewegungsübertragung mittels Synchrongetriebe, umfassend mindestens einen Zahnriemen (1) sowie mindestens eine Riemenscheibe (7), wobei der Zahnriemen (1) in der neutralen Biegezone Zugstränge aufweist oder diese Zone als Zugstrang ausgebildet ist, weiterhin im Zahnriemen leitfähige Bereiche (3) vorgesehen und/oder leitfähige Elemente (3) eingebettet sind, welche sich in Riemenlängsrichtung erstrecken, wobei im Bereich am oder zwischen den Riemenzahnfüßen (4) und/oder auf der Riemenrückseite die leitfähigen Bereiche und/oder Elemente zum Herstellen einer elektrischen Verbindung frei liegen oder in geeigneter Weise zum elektrischen Kontaktieren zugänglich sind, die Riemenscheibe (7) im Bereich der Scheibenzahnköpfe leitfähige Abschnitte aufweist, welche die leitfähigen Bereiche (3) des Zahnriemens (1) beim Kämmen kontaktieren,
**dadurch gekennzeichnet, daß**
im Bereich der Scheibenzahnköpfe mehrere in Querrichtung beabstandet angeordnete leitfähige Abschnitte vorgesehen sind, wobei zwischen den leitfähigen Abschnitten Isolierzonen bestehen und die leitfähigen Abschnitte als Polräder (8) ausgeführt sind, zwischen denen sich Isolationsabschnitte (9) als Isolierzonen befinden.

2. Vorrichtung nach Anspruch 1,
**dadurch gekennzeichnet, daß**
die Riemenscheibe (7) aus einer Lamellen-Sandwich-Struktur mit leitfähigen und isolierenden Lamellen besteht.

3. Vorrichtung nach einem der vorangegangenen Ansprüche,
**dadurch gekennzeichnet, daß**
der Zahnriemenrücken eine weitere Verzahnung aufweist, wobei auch oder alternativ über die Riemenrückseite eine elektrische Verbindung zu den leitfähigen Bereichen und/oder leitfähigen Elementen (5) innerhalb des Riemens (7) herstellbar ist.

4. Vorrichtung nach einem der vorangegangenen Ansprüche,
**dadurch gekennzeichnet, daß**
zur Gegenkontaktierung bei eingespanntem Riemen (7) eine elektrische Klemmleiste vorgesehen ist.

## Claims

1. A device for the transmission of force and/or movement by means of a synchronised transmission, comprising at least one toothed belt (1) as well as at least one pulley (7), with the toothed belt (1) comprising tension strands in the neutral bending zone or with this zone being formed as a tension strand, further with conductive areas (3) being provided in the toothed belt, and/or conductive elements (3) being embedded which extend in the longitudinal direction of the belt, with the conductive areas and/or elements in the area at the or between the roots of the belt teeth (4) and/or on the belt backside being exposed for establishing an electrical connection or being accessible in a suitable manner for electrical contact making, the pulley (7) comprising conductive portions in the area of the tips of the pulley teeth, which contact the conductive areas (3) of the toothed belt (1) upon meshing,
**characterised in that**
in the area of the tips of the pulley teeth several conductive portions are arranged in a spaced relationship in the transverse direction, with insulating zones being provided between the conductive portions and with the conductive portions being formed as magnet wheels (8) between which insulating portions (9) are disposed as insulating zones.

2. The device according to Claim 1,
**characterised in that**
the pulley (7) consists of a lamellar sandwich structure of conductive and insulating lamellas.

3. The device according to one of the previous claims,
**characterised in that**
the toothed belt back comprises a further toothing, whereby additionally or alternatively an electrical connection via the belt backside may be established to the conductive areas and/or conductive elements (5) within the belt (7).

4. The device according to one of the previous claims,
**characterised in that**
an electrical terminal board is provided for the opposite contact making with the belt (7) being in the mounted condition.

## Revendications

1. Dispositif de transmission de force et/ou de mouvement au moyen d'une transmission synchronisée, comprenant au moins une courroie dentée (1) ainsi qu'au moins une poulie à courroie (7), la courroie dentée (1) présentant dans la zone de courbure neutre des brins sous traction ou cette zone étant réalisée sous forme de brin sous traction, dans la courroie dentée sont en outre prévues des régions (3) conductrices et/ou sont noyés des éléments conducteurs qui s'étendent en direction longitudinale de la courroie, et dans la région sur le pied de dent de courroie ou entre les pieds de dents de courroie (4) et/ou sur la face postérieure de courroie, pour établir une liaison électrique, les régions conductrices et/ou des éléments conducteurs sont dégagées ou accessibles de manière appropriée pour la mise en contact électrique, la poulie à courroie (7) présente dans la région des têtes de dents de poulie des tronçons conducteurs qui, lors de l'engrènement, viennent en contact avec les régions conductrices (3) de la courroie dentée (1),
**caractérisé en ce que**
dans la région des têtes de dents de poulie sont prévus plusieurs tronçons conducteurs agencés à distance en direction transversale, et entre les tronçons conducteurs se trouvent des zones isolantes, et les tronçons conducteurs sont réalisés sous formes de roues polaires (8) entre lesquelles se trouvent des tronçons d'isolation (9) servant de zones isolantes.

2. Dispositif selon la revendication 1, **caractérisé en ce que** la poulie à courroie est constituée par une structure sandwich en lamelles avec lamelles conductrices et lamelles isolantes.

3. Dispositif selon l'une des revendications précédentes, **caractérisé en ce que** le dos de courroie dentée présente une autre denture, et également ou en alternative, une liaison électrique avec les régions conductrices et/ou les éléments (5) conducteurs peut être réalisée à l'intérieur de la courroie (7) via la face postérieure de courroie.

4. Dispositif selon l'une des revendications précédentes, **caractérisé en ce qu'**une réglette à bornes électrique est prévue pour établir un contact complémentaire lorsque la courroie (7) est serrée.
